# EUROPÄISCHE PATENTANMELDUNG

(11) **EP 3 395 507 A1**
(43) Veröffentlichungstag der Anmeldung: **31.10.2018**
(21) Anmeldenummer: 18000381.6
(22) Anmeldetag: 19.04.2018
(51) Int. Cl.: B25J 9/00, B25J 19/06, G05B 19/00

(54) **TUBEN-UMSETZVORRICHTUNG IN EINER TUBENFÜLLMASCHINE UND VERFAHREN ZU IHRER STEUERUNG**

(30) Priorität: 28.04.2017 DE 102017004095
(71) Anmelder: IWK Verpackungstechnik GmbH, 76297 Stutensee (DE)
(72) Erfinder: Behringer, Thomas, D-76467 Bietigheim (DE); Westphal, Jannis, D-76676 Graben-Neudorf (DE); Schweikert, Wolfgang, D-76661 Philippsburg (DE)
(74) Vertreter: Lichti - Patentanwälte Partnerschaft mbB

(57) **Zusammenfassung**

Eine Tuben-Umsetzvorrichtung in einer Tubenfullmaschine weist einen 1. Förderer, mit dem die Tuben in Form eines Tuben-Gebindes einen Zwischenlagerplatz zuführbar sind, und eine Umsetzvorrichtung auf, mit der die Tuben von dem Zwischenlagerplatz auf einen weiterführenden 2. Förderer ablegbar sind. Die Umsetzvorrichtung weist einen Roboter mit schwenkbaren Armen und einer Greifvorrichtung zum Ergreifen einer oder mehrerer Tuben auf. Dabei ist vorgesehen, dass der Roboter ein kollaborativer Roboter (Cobot) ist und dass eine Sensorvorrichtung vorgesehen ist, mittels der ein den Cobot enthaltende Raum hinsichtlich der Anwesenheit eines Lebewesens überwachbar ist. Wenn die Sensorvorrichtung in dem überwachten Raum ein Lebewesen feststellt, wird die Arbeitsgeschwindigkeit der Tuben-Umsetzvorrichtung auf einen Wert >0 Tuben/min verringert, jedoch nicht abgeschaltet.

## Beschreibung

Die Erfindung betrifft eine Tuben-Umsetzvorrichtung in einer Tubenfüllmaschine, mit einem 1. Förderer, mit dem Tuben in Form eines Tuben-Gebindes einem Zwischenlagerplatz zuführbar sind, und einer Umsetzeinrichtung, mit der die Tuben von dem Zwischenlagerplatz auf einem weiterführenden 2. Förderer ablegbar sind, wobei die Umsetzeinrichtung einen Roboter mit schwenkbaren Armen und einer Greifvorrichtung zum Ergreifen einer oder mehrerer Tuben aufweist.

Darüber hinaus betrifft die Erfindung ein Verfahren zur Steuerung einer entsprechenden Tuben-Umsetzvorrichtung in einer Tubenfüllmaschine.

In einer Tubenfüllmaschine werden vorgefertigte TubenRohlinge (im folgenden "Tuben") in jeweils einen Tubenhalter eingesetzt und durchlaufen dort mehrere Arbeitsstationen, in denen die Tuben mit einem üblicherweise pastösen Produkt, beispielsweise einer Creme, gefüllt und anschließend verschlossen werden. Die Tuben werden in Form eines Tuben-Gebindes, üblicherweise in einer Kiste oder einem Karton angeliefert, in dem die Tuben vertikal nebeneinander und parallel zueinander unter enger Packung enthalten sind. Im Folgenden soll beispielhaft davon ausgegangen werden, dass die Tuben in einem Tuben-Gebinde in Form eines Kartons angeliefert werden, jedoch ist die Erfindung darauf nicht beschränkt.

Der Karton wird auf seiner Oberseite geöffnet, so dass die Tuben nach oben aus dem Karton entnommen werden können. Diese Arbeit wird in vielen Fällen manuell von einer Bedienperson ausgeführt, die die Tuben aus dem Karton entnimmt und auf einem weiterführenden Förderer ablegt. Es ist jedoch auch bekannt, die Entnahme der Tuben maschinell durchzuführen. Zu diesem Zweck wird der geöffnete Karton mittels eines 1. Förderers einem Zwischenlagerplatz zugeführt und dort über Anschläge in vorbestimmter Weise positioniert. Die Entnahme der Tuben aus dem Karton erfolgt mittels eines Roboters, bei dem es sich üblicherweise um einen mehrachsigen Mehr-Gelenk-Roboter handelt, der an seinem äußeren Arm eine Greifvorrichtung trägt, mit der er in die im Karton befindlichen Tuben eingreifen und diese erfassen kann. Anschließend wird die Gruppe von erfassten Tuben aus dem Karton herausgehoben und auf einem weiterführenden 2. Förderer abgelegt. Ein derartiger Roboter ist sehr teuer und es besteht darüber hinaus die Notwendigkeit, den Roboter in einem Schutzkäfig oder einem Schutzgehäuse anzuordnen, um zu verhindern, dass Menschen in den Arbeitsbereich des Roboters kommen und durch diesen eventuell verletzt werden. Bei einer Störung bei der Tuben-Umsetzung muss die Verpackungsmaschine angehalten und der Schutzkäfig geöffnet werden. Dies ist aufwändig und führt zu relativ langen Stillstandszeiten der Tubenfüllmaschine im Falle einer Störung.

Der Erfindung liegt die Aufgabe zugrunde, eine Tuben-Umsetzvorrichtung in einer Tubenfüllmaschine zu schaffen, bei der die vorgenannten Nachteile vermieden sind und bei der in konstruktiv einfacher Weise eine hohe Leistungsfähigkeit und geringe Stillstandszeiten der Tubenfüllmaschine zu erreichen sind.

Diese Aufgabe wird in vorrichtungstechnischer Hinsicht durch eine Tuben-Umsetzvorrichtung mit den Merkmalen des Anspruchs 1 gelöst. Dabei ist vorgesehen, dass der Roboter ein kollaborativer Roboter (Cobot) ist und dass eine Sensorvorrichtung vorgesehen ist, mittels der ein den Cobot enthaltender Raum hinsichtlich der Anwesenheit eines Lebewesens überwachbar ist.

Erfindungsgemäß wird von der Grundüberlegung ausgegangen, in der Tuben-Umsetzvorrichtung zwar einen Roboter zu verwenden, diesen jedoch als kollaborativen Roboter (Cobot) auszugestalten. Als Cobot wird ein Industrieroboter bezeichnet, der mit Menschen gemeinsam arbeitet und im Produktionsprozess nicht durch Schutzeinrichtungen von diesen getrennt ist. Da der Cobot in unmittelbarer Nähe von Menschen arbeitet, ist erfindungsgemäß die Sensorvorrichtung vorgesehen, die feststellt, ob sich ein Lebewesen innerhalb des von der Sensorvorrichtung überwachten Raumes befindet, wobei auch der Cobot innerhalb dieses Raumes angeordnet ist. Bei der Sensorvorrichtung kann es sich um einen Bewegungssensor und/oder einen Temperatursensor, der auf die Körpertemperatur des Lebewesens reagiert, und/oder über eine Videoerfassung mit einer Kamera und einer Bildauswerte-Elektronik und/oder um einen Ultraschall-Sensor handeln.

Im Falle einer Störung kann eine Bedienperson die Tuben-Umsetzvorrichtung abschalten und hat sofortigen Zugriff auf die einzelnen Bauelemente, da diese nicht von einem Schutzkäfig umhüllt sind.

Hinsichtlich des Verfahrens zur Steuerung einer Tuben-Umsetzvorrichtung in einer Tubenfüllmaschine wird erfindungsgemäß so vorgegangen, dass die Arbeitsgeschwindigkeit der Tuben-Umsetzvorrichtung auf einen Wert >0 m/sec bzw. auf einen Wert >0 Tuben/min verringert wird, wenn die Sensorvorrichtung in dem überwachten Raum ein Lebewesen feststellt. Wesentlich ist dabei, dass die Tuben-Umsetzvorrichtung bei Feststellung eines Lebewesens in dem überwachten Raum nicht vollständig abgeschaltet, sondern lediglich hinsichtlich ihrer Arbeitsgeschwindigkeit wesentlich auf eine Arbeitsgeschwindigkeit reduziert wird, die so gering ist, dass Verletzungen oder Beeinträchtigungen einer Bedienperson praktisch ausgeschlossen sind.

Die Tuben-Umsetzvorrichtung arbeitet je nach Leistungsfähigkeit beispielsweise in einem Bereich der Bewegungsgeschwindigkeit des Cobot von ca. 1000 mm/sec. Wenn die Anwesenheit eines Lebewesens in dem überwachten Raum festgestellt wird, wird die Bewegungsgeschwindigkeit des Cobot und der Tuben-Umsetzvorrichtung auf einen Wert im Bereich von 100 mm/sec bis 600 mm/sec und insbesondere von weniger als 500 mm/sec und gegebenenfalls auf weniger als 200 mm/sec verringert.

In bevorzugter Ausgestaltung der Erfindung ist vorgesehen, dass nicht nur der Cobot innerhalb des überwachten Raumes angeordnet ist, sondern dass der Zwischenlagerplatz und/oder der 1. Förderer und/oder der 2. Förderer zumindest teilweise innerhalb des überwachten Raumes angeordnet sind. Besonders bevorzugt ist dabei, dass der Zwischenlagerplatz vollständig innerhalb des überwachten Raumes angeordnet ist, während von dem 1. Förderer und/oder dem 2. Förderer nur die Abschnitte innerhalb des überwachten Raumes angeordnet sind, die sich unmittelbar an den Zwischenlagerplatz anschließen.

Der 1. Förderer, mit dem das Tuben-Gebinde bzw. der mit den Tuben gefüllte Karton zugeführt wird, kann beispielsweise von einer Rollenbahn oder einem Bandförderer gebildet sein. Von dem 1. Förderer wird das Tuben-Gebinde an den Zwischenlagerplatz übergeben. Der Zwischenlagerplatz ist vorzugsweise auf einem Bandförderer ausgebildet, der beispielsweise bidirektional angetrieben sein kann, um das Gebinde in eine vorbestimmte Position auf den Zwischenlagerplatz ausrichten zu können.

In Weiterbildung der Erfindung kann vorgesehen sein, dass der Zwischenlagerplatz zumindest ein verstellbares Leitelement aufweist. Vorzugsweise sind zumindest zwei relativ zueinander verstellbare Leitelemente vorgesehen, zwischen denen das Gebinde unter enger Passung aufnehmbar ist. Bei den Leitelementen kann es sich beispielsweise um sich in Transportrichtung erstreckende Leitschienen handeln.

In einer 1. möglichen Ausgestaltung kann vorgesehen sein, dass die Leitelemente in ihrem gegenseitigen Abstand senkrecht zur Transportrichtung und parallel zu einer Auflagefläche des Zwischenlagerplatzes verstellbar sind, um auf diese Weise ihren Abstand an die Breite des Tuben-Gebindes anpassen zu können.

Zusätzlich oder alternativ dazu kann vorgesehen sein, dass die Leitelemente in ihrem Abstand von der Auflagefläche des Zwischenlagerplatzes verstellbar sind, so dass die Höhe der Leitelemente oberhalb der Auflagefläche des Zwischenlagerplatzes veränderbar und an die Größe des Gebindes anpassbar ist.

Für die Änderung des gegenseitigen Abstandes der Leitelemente kann eine senkrecht zur Transportrichtung und mit Abstand oberhalb der Auflagefläche des Zwischenlagerplatzes verlaufende horizontale Linearführung vorgesehen sein. An der horizontalen Linearführung ist ein Horizontalschlitten verschieblich gehalten, der in einer vorbestimmten Position beispielsweise mittels einer Klemmvorrichtung arretiert werden kann. An dem Horizontalschlitten ist eine vertikale Linearführung angebracht, auf der ein Vertikalschlitten in vertikaler Richtung längsverschieblich angeordnet ist. Der Vertikalschlitten kann ebenfalls beispielsweise mittels einer Klemmvorrichtung in einer gewünschten Position arretiert werden. An dem Vertikalschlitten ist eines der Leitelemente gehalten. Durch Verstellung der Schlitten längs der jeweiligen Linearführung kann die Position des Leitelementes relativ zu dem anderen Leitelement verändert werden.

Das andere Leitelement kann in gleichartiger Weise gelagert sein und sollte zumindest an einem vertikal verstellbaren Vertikalschlitten gehalten sein, um seinen Abstand von der Auflagefläche des Zwischenlagerplatzes verändern zu können.

In einer normalen Betriebsstellung sind die Leitelemente in einem Abstand oberhalb der Auflagefläche des Zwischenlagerplatzes angeordnet. Dabei besteht die Gefahr, dass sich eine Bedienperson bei einer Fehlfunktion der Sensorüberwachung an den Leitelementen einklemmt. Um dies zu verhindern, kann eine spezielle Lagerung der Leitelemente vorgesehen sein. Einerseits kann jedes Leitelement zu diesem Zweck mittels eines Drehlagers schwenkbar gelagert sein. Die Drehachse verläuft dabei vorzugsweise senkrecht zur Transportrichtung und mit Abstand oberhalb der Auflagefläche des Zwischenlagerplatzes. Die Leitelemente sind um das Drehlager drehbar. Um sie bei einem normalen Betrieb der Tuben-Umsetzvorrichtung in ihrer gewünschten Betriebsstellung zu halten, kann vorgesehen sein, dass jedes Leitelement mittels zumindest einer kraftschlüssigen Halterung in dieser Betriebsstellung gehalten ist. Die kraftschlüssige Halterung kann von zumindest einem Magneten und/oder von zumindest einer Rastvorrichtung gebildet sein. Wenn auf eines der Leitelemente eine außergewöhnliche Kraft einwirkt, indem beispielsweise die Gefahr des Einklemmens eines Körperteils einer Bedienperson besteht, lösen sich die Leitelemente aus der ihnen zugeordneten kraftschlüssigen Halterung, so dass jedes Leitelement um sein Drehlager frei schwenkbar ist.

Wenn das Tuben-Gebinde von dem 1. Förderer auf die Auflagefläche des Zwischenlagerplatzes übergeben wird und dann auf dem Zwischenlagerplatz mit Hilfe der Leitelemente und gegebenenfalls einer Verstellung des Zwischenlagerplatzes positioniert wird, sollte überprüft werden, ob sich das Tuben-Gebinde in der gewünschten Position befindet. Zu diesem Zweck kann in Weiterbildung der Erfindung vorgesehen sein, dass an dem Zwischenlagerplatz eine Sensoroptik beispielsweise in Form einer oder mehreren Lichtschranken und/oder in Form einer Kamera mit einer Bildauswertungseinheit vorgesehen ist, so dass die Position des Tuben-Gebindes auf dem Zwischenlagerplatz erfassbar ist und überprüft werden kann.

Wenn das Tuben-Gebinde auf dem Zwischenlagerplatz ordnungsgemäß positioniert ist, greift der Cobot mit seiner Greifvorrichtung üblicherweise von oben in das Tuben-Gebinde ein und nimmt eine Vielzahl von Tuben gleichzeitig aus dem Tuben-Gebinde und legt die Tuben auf dem weiterführenden 2. Förderer ab, bei dem es sich vorzugsweise ebenfalls um einen endlos umlaufenden Bandförderer handelt.

Die Sensorvorrichtung, mit der der Raum überwacht wird, ist vorzugsweise mit einer Auswerte- und Steuervorrichtung verbunden. Wenn mittels der Sensorvorrichtung festgestellt wird, dass sich ein Lebewesen in dem überwachten Raum befindet, wirkt die Auswerte- und Steuervorrichtung auf die Antriebsvorrichtungen der Tuben-Umsetzvorrichtung und gegebenenfalls auch auf die Antriebsvorrichtungen der Tubenfüllmaschine ein, um die Arbeits- und/oder Bewegungsgeschwindigkeit der Tuben-Umsetzvorrichtung und vorzugsweise der gesamten Tubenfüllmaschine und insbesondere zumindest des 1. Förderers und des Cobot und des 2. Förderers auf einen Wert >0 zu verringern, d.h. die Tuben-Umsetzvorrichtung wird nicht vollständig angehalten, sondern in ihrer Geschwindigkeit nur soweit reduziert, dass keine Gefahr für das sich im Raum befindliche Lebewesen besteht.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Darstellung der Tuben-Umsetzvorrichtung und
- Fig. 2: eine vergrößerte Teildarstellung der Tuben-Umsetzvorrichtung gemäß Figur 1.

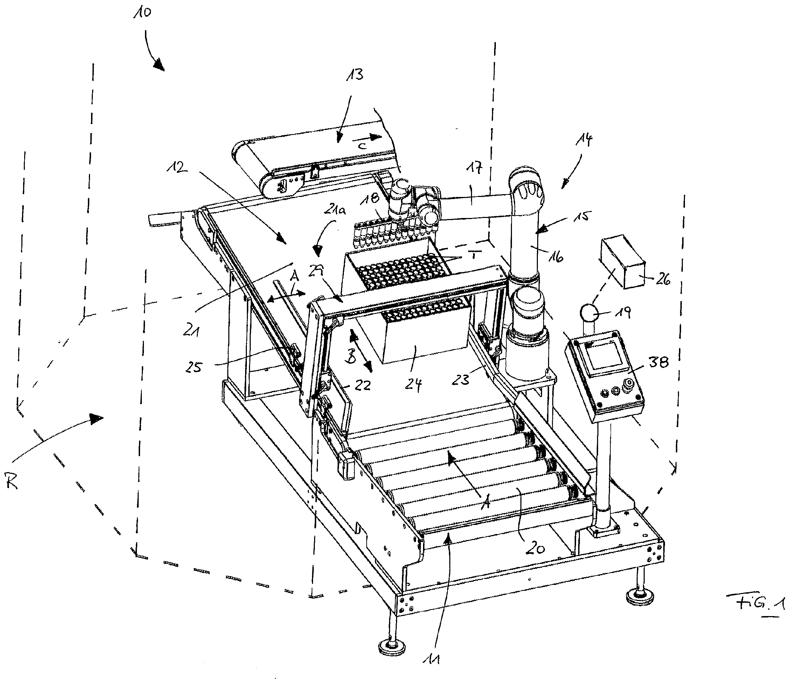

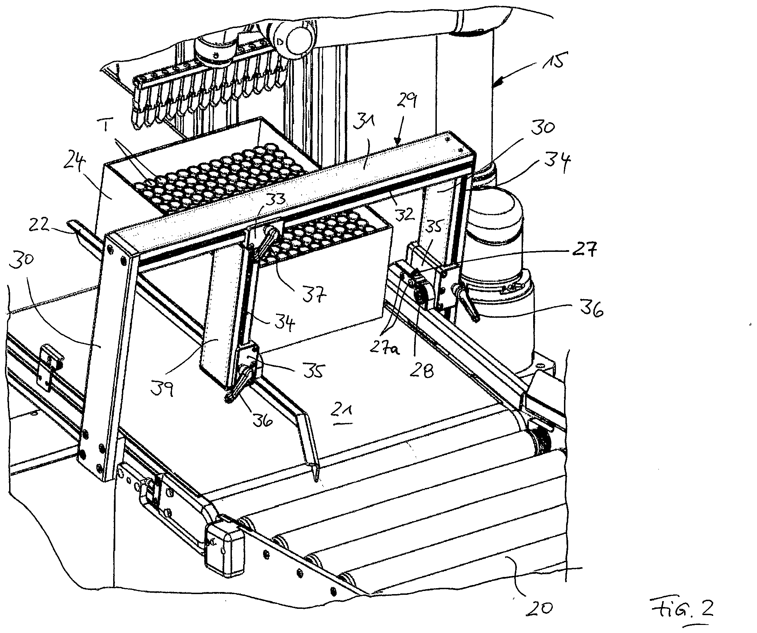

Eine in den Figuren 1 und 2 dargestellte Tuben-Umsetzvorrichtung 10 dient dazu, Tubenrohlinge (im Folgenden Tuben) T, die in einem Tuben-Gebinde 24 in Form eines Kartons angeordnet sind, aus dem Tuben-Gebinde 24 zu entnehmen und zu vereinzeln. Die Tuben-Umsetzvorrichtung 10 umfasst einen 1. Förderer 11 in Form einer Rollenbahn 20, auf dem das Tuben-Gebinde 24 in Transportrichtung A herantransportiert wird. An den 1. Förderer 11 schließt sich ein Zwischenlagerplatz 12 an, der auf einem endlos umlaufenden Bandförderer 21 ausgebildet ist und bidirektional, d.h. in Transportrichtung A und in Gegenrichtung dazu angetrieben ist, wie es durch den Doppelpfeil B angedeutet ist. Auf der Oberseite des Zwischenlagerplatzes 12 ist eine Auflagefläche 21a gebildet.

Um die Position des Tuben-Gebindes 24 auf der Auflagefläche 21a des Zwischenlagerplatzes 12 exakt zu bestimmen und verändern bzw. einstellen zu können, ist eine Sensoroptik 25 beispielsweise in Form einer sich senkrecht zur Transportrichtung A erstreckenden Lichtschranke vorgesehen. Mittels der Sensoroptik 25 kann festgestellt werden, ob das Tuben-Gebinde 24 die gewünschte Position bereits erreicht hat oder durch Verstellen des Bandförderers 21 bzw. des Zwischenlagerplatzes 12 nachjustiert werden muss.

Der Zwischenlagerplatz 12 ist von einem portalartigen Rahmen 29 mit Abstand übergriffen, der zwei seitliche Stützen 30 aufweist (s. Fig. 2), die an ihren oberen Enden über einen Querträger 31 miteinander verbunden sind. An dem Querträger 31 ist eine horizontale Linearführung 32 angeordnet, auf der ein Horizontalschlitten 33 längs-verschieblich sitzt. Der Horizontalschlitten 33 kann mittels einer Klemmvorrichtung 37 beispielsweise in Form eines dargestellten Klemmhebels in jeder gewünschten Position längs der horizontalen Linearführung 32 arretiert werden.

An dem Horizontal-schlitten 33 ist ein Vertikalträger 39 befestigt, der eine vertikale Linearführung 34 trägt. Eine weitere vertikale Linearführung 34 ist an der gemäß den Figurenrechten seitlichen Stütze 30 des Rahmens 29 ausgebildet.

Längs jeder vertikalen Linearführung 34 ist ein Vertikalschlitten 35 längsverschieblich geführt und kann mittels einer Klemmvorrichtung 36 beispielsweise in Form eines dargestellten Klemmhebels in einer gewünschten Position auf der vertikalen Linearführung 34 fixiert werden. An jedem Vertikalschlitten 35 ist ein schienenartiges Leitelement 22, 23 gehalten, das sich in Transportrichtung A erstreckt.

Jedes Leitelement 22, 23 ist über ein Drehlager 28 an dem Vertikalschlitten 35 schwenkbar angebracht. In Figur 2 ist auf der rechten Seite des portalartigen Rahmens 29 das Leitelement 23 weggelassen, um die Lagerung des Leitelementes 23 sichtbar zu machen. Die Drehachse des Drehlagers 28 erstreckt sich senkrecht zur Transportrichtung A und im Abstand oberhalb der Auflagefläche 21a des Bandförderers 21. Um das schienenartige Leitelement 22, 23 in einer Betriebsstellung zu fixieren, ist eine kraftschlüssige Halterung 27 in Form von Magneten 27a an dem Vertikalschlitten 35 vorgesehen. Wenn auf das Leitelement 22, 23 jedoch eine Kraft einwirkt, die größer als die magnetische Haltekraft ist, kommt das Leitelement 22, 23 von den Magneten 27a frei und kann dann um das Drehlager 28 schwenken.

Mittels der Verstellung des Horizontalschlittens 33 längs der horizontalen Linearführung 32 kann der gegenseitige Abstand der Leitelemente 22, 23 quer zur Transportrichtung A eingestellt und an die Größe des jeweiligen Tuben-Gebindes 24 angepasst werden, wie es durch den Doppelpfeil A angedeutet ist, so dass das Tuben-Gebinde 24 zwischen den Leitelementen 22, 23 unter enger Passung aufgenommen werden kann (s. Fig. 2).

Mittels der Verstellung der Vertikalschlitten 35 längs der vertikalen Linearführungen 34 kann die Höhe bzw. der Abstand der Leitelemente 22, 23 zu der darunter befindlichen Auflagefläche 21a verändert und an die Größe bzw. Höhe des Tuben-Gebindes 24 angepasst werden.

Neben dem Zwischenlagerplatz 12 ist eine Umsetzeinrichtung 14 in Form eines kollaborativen Roboters (Cobot) 15 angeordnet, der als mehrarmiger sogenannter Mehrachs-Roboter ausgebildet ist, mehrere relativ zueinander drehbare und verstellbare Arme 16 und 17 aufweist und am Kopf eine Greifvorrichtung 18 trägt, mit der gemäß dem dargestellten Ausführungsbeispiel 14 Tuben T gleichzeitig aus dem Tuben-Gebinde 24 entnommen werden können. Der Cobot 15 legt die aus dem Tuben-Gebinde 24 entnommenen Tuben T in horizontaler Ausrichtung auf der Oberseite eines weiterführenden 2. Förderers 13 ab, der ebenfalls als endlos umlaufender Bandförderer ausgebildet ist und die Tuben T einer nachfolgenden Arbeitsstation zuführt, wie es durch den Pfeil C angedeutet ist.

Nahe dem 1. Förderer 11 ist ein Bedienpanel 38 angeordnet, mit dem eine Bedienperson die Funktionen der Tuben-Umsetzvorrichtung 10 steuern kann. Dem Bedienpanel 38 ist eine Sensorvorrichtung 19 zugeordnet, mit der ein gestrichelt dargestellter Raum R hinsichtlich der Anwesenheit eines Lebewesens überwacht wird. Zu diesem Zweck kann die Sensorvorrichtung 19 als Bewegungssensor und/oder als Thermo-Sensor und/oder als Kamera mit einer Bildauswerteeinheit oder in sonstiger geeigneter Weise ausgestaltet sein. Wie Figur 1 zu entnehmen ist, befinden sich der Zwischenlagerplatz 12 und der Cobot 15 vollständig innerhalb des überwachten Raums R. Die Sensorvorrichtung 19 steht mit einer Auswerte- und Steuervorrichtung 26 in Verbindung. Wenn die Sensorvorrichtung 19 feststellt, dass sich ein Lebewesen und insbesondere ein Mensch innerhalb des überwachten Raums R befindet, gibt sie ein entsprechendes Signal an die Auswerte- und Steuervorrichtung 26, die daraufhin die Arbeitsgeschwindigkeit der Tuben-Umsetzvorrichtung 10 auf einen Wert >0 stark reduziert, d.h. die Tuben-Umsetzvorrichtung 10 wird nicht zum Stillstand gebracht, sondern mit einer Geschwindigkeit weiterbetrieben, die für das in dem Raum R festgestellte Lebewesen ungefährlich ist. Sobald die Sensorvorrichtung 19 feststellt, dass sich das Lebewesen nicht mehr in dem Raum R befindet, wird ein entsprechendes Signal an die Auswerte- und Steuervorrichtung 26 gegeben, die daraufhin die Arbeitsgeschwindigkeit der Tuben-Umsetzvorrichtung 10 wieder auf den ursprünglichen Wert erhöht.

## Patentansprüche

1. Tuben-Umsetzvorrichtung (10) in einer Tubenfüllmaschine, mit einem 1. Förderer (11), mit dem Tuben (T) in Form eines Tuben-Gebindes (24) einem Zwischenlagerplatz (12) zuführbar sind, und mit einer Umsetzeinrichtung (14), mit der die Tuben (T) von dem Zwischenlagerplatz (12) auf einem weiterführenden 2. Förderer (13) ablegbar sind, wobei die Umsetzeinrichtung (14) einen Roboter (15) mit schwenkbaren Armen (16, 17) und einer Greifvorrichtung (18) zum Ergreifen einer oder mehrerer Tuben (T) aufweist, **dadurch gekennzeichnet, dass** der Roboter ein kollaborativer Roboter (Cobot) (15) ist und dass eine Sensorvorrichtung (19) vorgesehen ist, mittels der ein den Cobot (15) enthaltender Raum (R) hinsichtlich der Anwesenheit eines Lebewesens überwachbar ist.

2. Tuben-Umsetzvorrichtung nach Anspruch 1, **dadurch gekennzeichnet, dass** der Zwischenlagerplatz (12) und/oder der 1. Förderer (11) und/oder der 2. Förderer (13) zumindest teilweise innerhalb des überwachten Raumes (R) angeordnet sind.

3. Tuben-Umsetzvorrichtung nach Anspruch 1 oder 2, **dadurch gekennzeichnet, dass** der 1. Förderer (11) eine Rollenbahn (20) oder ein Bandförderer ist.

4. Tuben-Umsetzvorrichtung nach einem der Ansprüche 1 bis 3, **dadurch gekennzeichnet, dass** der Zwischenlagerplatz (12) auf einem Bandförderer (21) ausgebildet ist.

5. Tuben-Umsetzvorrichtung nach Anspruch 4, **dadurch gekennzeichnet, dass** der Bandförderer (21) bidirektional angetrieben ist.

6. Tuben-Umsetzvorrichtung nach einem der Ansprüche 1 bis 5, **dadurch gekennzeichnet, dass** der Zwischenlagerplatz (12) zumindest ein verstellbares Leitelement (22, 23) aufweist.

7. Tuben-Umsetzvorrichtung nach Anspruch 6, **dadurch gekennzeichnet, dass** zwei relativ zueinander verstellbare Leitelemente (22, 23) vorgesehen sind, zwischen denen das Tuben-Gebinde (24) unter enger Passung aufnehmbar ist.

8. Tuben-Umsetzvorrichtung nach Anspruch 7, **dadurch gekennzeichnet, dass** die Leitelemente (22, 23) in ihrem gegenseitigen Abstand senkrecht zur Transportrichtung (A) verstellbar sind.

9. Tuben-Umsetzvorrichtung nach Anspruch 7 oder 8, **dadurch gekennzeichnet, dass** die Leitelemente (22, 23) in ihrem Abstand von einer Auflagefläche (21a) des Zwischenlagerplatzes (12) verstellbar sind.

10. Tuben-Umsetzvorrichtung nach einem der Ansprüche 6 bis 9, **dadurch gekennzeichnet, dass** jedes Leitelement (22, 23) mittels eines Drehlagers (28) schwenkbar gelagert ist.

11. Tuben-Umsetzvorrichtung nach einem der Ansprüche 6 bis 10, **dadurch gekennzeichnet, dass** jedes Leitelement (22, 23) mittels zumindest einer kraftschlüssigen Halterung (27) in einer Betriebsstellung gehalten ist.

12. Tuben-Umsetzvorrichtung nach Anspruch 11, **dadurch gekennzeichnet, dass** die kraftschlüssige Halterung (27) Magnete (27a) und/oder Rastvorrichtungen aufweist.

13. Tuben-Umsetzvorrichtung nach einem der Ansprüche 1 bis 12, **dadurch gekennzeichnet, dass** an dem Zwischenlagerplatz (12) eine Sensoroptik (25) angeordnet ist, mittels der die Position des Tuben-Gebindes (24) auf dem Zwischenlagerplatz (12) erfassbar ist.

14. Tuben-Umsetzvorrichtung nach einem der Ansprüche 1 bis 13, **dadurch gekennzeichnet, dass** die Sensorvorrichtung (19) mit einer Auswerte- und Steuervorrichtung (26) verbunden ist, mittels der die Arbeits- und/oder Bewegungsgeschwindigkeit zumindest des 1. Förderers (11) und des Cobots (15) und des 2. Förderers (13) verringerbar ist.

15. Verfahren zur Steuerung einer Tuben-Umsetzvorrichtung in einer Tubenfüllmaschine, wobei die Tuben-Umsetzvorrichtung (10) einen 1. Förderer (11), mit dem Tuben (T) in Form eines Tuben-Gebindes (24) einem Zwischenlagerplatz (12) zugeführt werden, und eine Umsetzeinrichtung (14) aufweist, mit der die Tuben (T) von dem Zwischenlagerplatz (12) auf einem weiterführenden 2. Förderer (13) abgelegt werden, wobei die Umsetzeinrichtung (14) einen kollaborativen Roboter (Cobot) (15) aufweist, wobei ein den Cobot (15) enthaltender Raum (R) mittels einer Sensorvorrichtung (19) hinsichtlich der Anwesenheit eines Lebewesens überwacht wird und wobei die Arbeitsgeschwindigkeit der Tuben-Umsetzvorrichtung auf einen Wert >0 mm/sec verringert wird, wenn die Sensorvorrichtung (19) in dem überwachten Raum (R) ein Lebewesen feststellt.

16. Verfahren nach Anspruch 1, **dadurch gekennzeichnet, dass** die Arbeitsgeschwindigkeit der Tuben-Umsetzvorrichtung auf einen Wert im Bereich von 100 mm/sec bis 600 mm/sec und insbesondere von 200 mm/sec bis 500 mm/sec verringert wird.
